# EUROPEAN PATENT APPLICATION

(11) **EP 3 680 452 A1**
(43) Date of publication of application: **15.07.2020**
(21) Application number: 19215459.9
(22) Date of filing: 12.12.2019
(51) Int. Cl.: F01D 5/18, F01D 9/04, F01D 9/06, F23R 3/00

(54) **A DOUBLE-WALL GEOMETRY**

(30) Priority: 14.01.2019 GB 201900474
(71) Applicant: Rolls-Royce plc, London N1 9FX (GB)
(72) Inventor: Murray, Alexander, Derby, Derbyshire DE24 8BJ (GB); Ireland, Peter, Derby, Derbyshire DE24 8BJ (GB); Romero, Eduardo, Derby, Derbyshire DE24 8BJ (GB); Rawlinson, Anthony, Derby, Derbyshire DE24 8BJ (GB)
(74) Representative: Rolls-Royce plc

(57) **Abstract**

There is disclosed wall cooling system (50) having a double-wall geometry. A first wall (55) and a second wall (60) extend over a plan area with the second wall spaced from the first wall by a gap. The first wall (55) has multiple upstanding members (65) spanning the gap and contacting the second wall (60) such that the first and second walls are mechanically and thermally connected. The first wall (55) is shaped so as to provide a two-dimensional array of crests (85) and recesses (90). The crests (85) are spaced from the second wall (60). The first wall (55) has a plurality of through-holes (70) for flow of coolant through the first wall and into the gap. The cooling system (50) is suitable for use in a gas turbine engine (10), for example in the turbine (17, 19).

## Description

The present disclosure relates to a double-wall geometry, and more specifically, but not limited to, a double-wall geometry suitable for use at extremely high temperatures.

### INTRODUCTION

The efficiency of gas turbine engines continues to be a key incentive in gas turbine engine research and development. It is known that improved gas turbine engine thermal efficiency and specific power output may be achieved by increasing the mainstream core fluid operating temperature. However, in gas turbine engine environments, temperatures already exceed the point of structural integrity for the nickel superalloys from which the rotor blades of the compressors and turbines are typically cast. Consequently, these components require active cooling to maintain the structural integrity of the blades during use. As those desired temperatures continue to rise, methods of active cooling continue to be advanced.

Such advancements often aim to achieve a reduction in the required coolant mass-flow rate, and an elevation in the convective efficiency and overall cooling effectiveness achieved. Double-wall, effusion cooling systems present one possible advancement in the cooling of turbine blades.

Such a system is characterised by two walls that are mechanically connected via a plurality of spacers, referred to as pedestals, that maintain the walls in close proximity but provide for a volume in which coolant can flow. Coolant enters the space between the walls through impingement holes positioned on the internal wall. If the flow rate is sufficiently high, the resultant high velocity jet of coolant flow impinges on the hotter outer wall to provide a large increase in local heat transfer.

Whilst such cooling systems have not become commonplace, a few limited examples are described in the published patent applications US 6,514,042, US 6,808,367, US 6,916,150, US 5,702,232, US 5,328,331 and US 6,213,714.

Film holes are positioned on the outer wall to create a protective film of colder fluid over the outside surface of the blade. The pedestals also permit thermal conduction across the two walls resulting in a reduction in the thermal gradient between the walls and a consequent reduction in thermal stresses.

Research into quasi-transpiration, double-wall type cooling systems has been ongoing since the 1970s. A lack of widespread implementation, at least in part, resulted from manufacturing capabilities and cost, particularly during earlier research into the technology. However, more recently, a potentially more-significant challenge in their implementation has been found to be the thermomechanical stresses that result in the solid under thermal load due to the large temperature gradients between the two walls.

The structural loading and mechanical behaviour of the system is a key consideration that can impact the safety and operational life of the cooling system.

There is proposed a double-wall geometry that overcomes or mitigates one or more of these problems.

### SUMMARY OF DISCLOSURE

According to a first aspect of the disclosure there is provided a wall cooling system comprising a double-wall geometry having a first wall extending over a plan area and a second wall extending over the plan area and spaced from the first wall by a gap. The first wall comprises a plurality of upstanding members spanning the gap and contacting the second wall such that the first and second walls are mechanically and thermally connected. The first wall is shaped so as to provide a two-dimensional array of crests and recesses, wherein the crests are spaced from the second wall, and the first wall comprises a plurality of through-holes for flow of coolant through the first wall and into the gap.

The through-holes may be provided through the crests of the first wall. A plurality of the crests may have a through-hole therein. The array of crests may comprise some crests with through-holes and some crests without through-holes.

The first wall may be crenulated, folded, castellated and/or grooved to provide the array of crests and recesses.

The two dimensional array of crests and recesses is provided on a first side of the first wall, i.e. facing the second wall. The first wall may comprise an opposing array of crests and recesses on an opposing side thereof. The wall thickness of the first wall may be less than the amplitude of the array of crests and recesses.

The amplitude of the array of crests and recesses may be less than the height of the intermediate members, e.g. less than the gap between the first and second walls in a recess of the first wall.

The second wall may be exposed to a heat source in use. An outer/external surface of the second wall may be exposed to the heat source, e.g. being exposed to a temperature greater than the temperature of the first wall or in the gap.

The second wall may be gas-washed, e.g. by combustion products, in use.

The second wall may comprise apertures extending between the gap and an external surface of the second wall. A two-dimensional array of apertures may be provided. The apertures may allow flow of coolant from the gap over the external surface area of the second wall.

The apertures may be offset from the through-holes.

A diameter of the apertures may be approximately equal to, or greater than, a diameter of the through-holes.

According to a second aspect of the disclosure there is provided a combustion engine or sub-assembly thereof comprising the cooling system of the first aspect

According to a third aspect of the disclosure there is provided a gas turbine engine or sub-assembly thereof comprising the cooling system of the first aspect.

The gas turbine engine may be a gas turbine engine for an aircraft.

A gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case. The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding. The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN. The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C. As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### FIGURES

Embodiments will now be described by way of example only, with reference to the Figures, in which:
Figure 1 is a sectional side view of a gas turbine engine;
Figure 2 is a close-up sectional side view of an upstream portion of a gas turbine engine;
Figure 3 is a partially cut-away view of a gearbox for a gas turbine engine;
Figure 4 is a partially cut-away perspective view of a double-wall geometry according to a first embodiment of the disclosure;
Figure 5 is a cross-section of the double-wall geometry of Figure 4;
Figure 6 is a partially cut-away plan view of the double-wall geometry of Figures 4 and 5;
Figure 7 is a partially cut-away perspective view of a double-wall geometry according to a second embodiment of the disclosure;
Figure 8 is a cross-section of the double-wall geometry of Figure 7; and

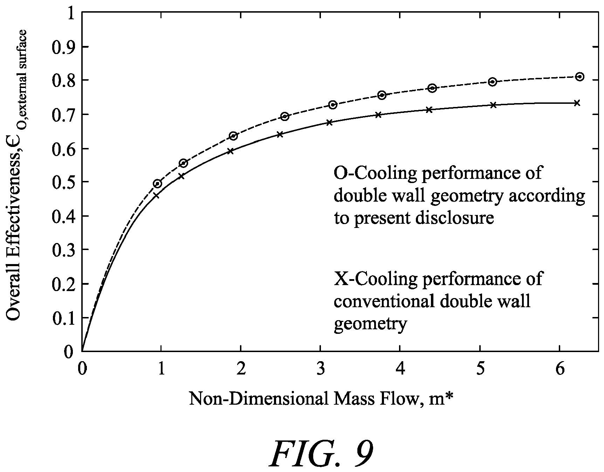

Figure 9 is a graph comparing the efficiency of the double-wall geometry according to the example of the present disclosure shown in Figure 4 and a conventional double-wall geometry.

Like reference numerals are used for corresponding features throughout the Figures.

### SPECIFIC DESCRIPTION

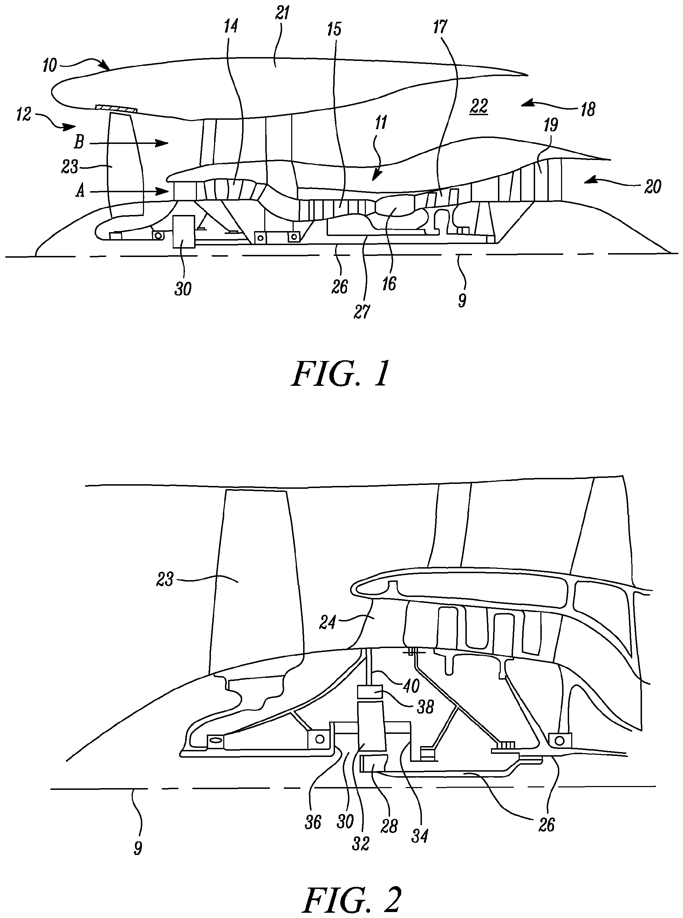

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

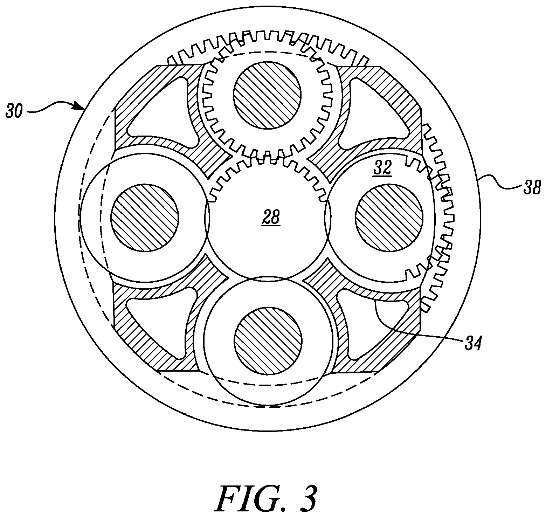

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The following disclosure concerns a wall cooling system and structure for components and sub-assemblies located in a hot region of the engine, such as the combustor 16, high-pressure turbine 17 or low-pressure turbine 19. Whilst the cooling structure is described in that context herein, it is to be noted that the structure could find application in other engine, flow-machine and/or heat exchanger applications where there is a need for a high rate of heat transfer away from a wall. The cooling structure is particularly suitable for components operating at a temperature greater than the melting point of their material make-up.

The disclosure concerns a double-wall, effusion type (e.g. quasi-transpiration) cooling system.

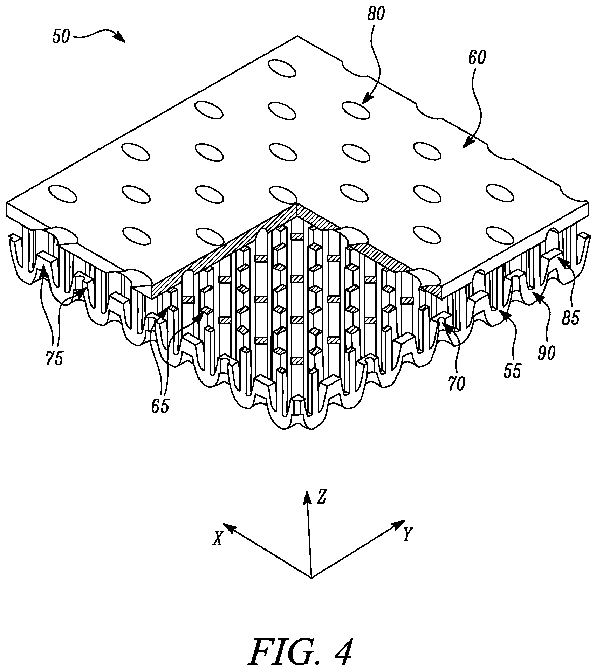

Figure 4 illustrates a double-wall geometry 50 according to a first embodiment of the present disclosure. In this example, the double-wall geometry 50 is comprised in a rotor blade for use in the high-pressure turbine 17 or low-pressure turbine 19, for example. However, the double-wall geometry 50 could equally apply to the turbine stators/vanes or the wall structure of the rotor hub or the static turbine casing.

The double-wall geometry 50 comprises an inner wall 55 and an outer wall 60. The inner wall 55 and outer wall 60 extend in generally parallel directions, i.e. such that the outer wall 60 overlies the inner wall 55. The outer wall 60 is shown as being generally planar in this example but could be arched or curved in other examples such that the inner and outer walls follow a parallel path.

Whilst the inner wall 55 is parallel with the outer wall 60 in a general sense, i.e. such that the inner wall 55 follows the same gross path as the outer wall 60, the inner wall 55 is itself profiled. The inner wall 55 has a repeating, undulating profile.

The inner wall 55 is profiled in both the longitudinal direction, x, and the transverse direction, y, to form crenulations 75, e.g. crests. Some of the crests formed by the crenulations 75 comprise impingement holes 70.

The inner wall 55 comprises an array of pedestals 65 extending from its inner surface to the outer wall 60. The pedestals 65 hold the inner 55 and outer 60 walls at a fixed spacing such that a gap exists therebetween. The gap beneath the outer wall defines a void between the inner and outer walls extending over the area of the walls.

It will be appreciated that he outer wall 60 has opposing surfaces, an inner surface of which faces the inner wall 55, and an outer surface of which faces an exterior of the structure 50

In this example, the outer wall 60 comprises an array of apertures 80 extending between its inner and outer surfaces, as will be described in further details below. The apertures are generally evenly spaced over the area of the outer wall 60. However in other examples, the apertures 80 could be omitted such that the outer surface is generally continuous, i.e. devoid of openings or discontinuities.

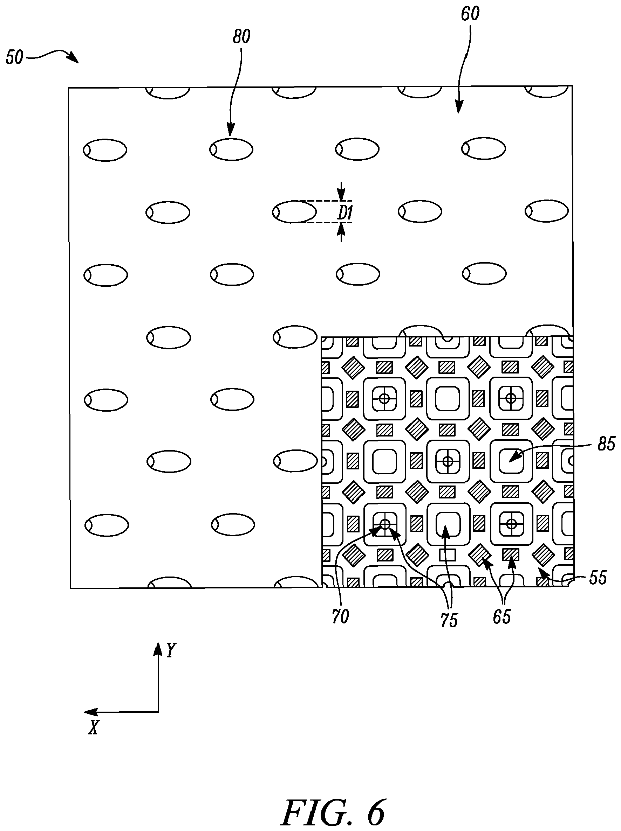

The crenulations 75 of the inner wall 55 define a two-dimensional array of crests 85 and a network of recesses 90 across the surface of the inner wall 55 (explained in more detail with reference to Figure 6 further on). For the sake of simplifying the following description, the crests 85 and recesses 90 will be defined based on the viewpoint of Figure 4, i.e. the crests 85 are defined as the highest points of the crenulations 75 in relation to the outer wall 60 and the recesses 90 are defined as the lowest points of the crenulations 75 in relation to the outer wall 60. That is, the crests 85 are defined as the points of inner wall 55 which are nearest to the outer wall 60 and the recesses 90 are defined as the points of inner wall 55 that are furthest from the outer wall 60. The crenulations 75 are of an amplitude such that the crests 85 do not extend to the outer wall 60.

The inner wall 55 is shaped so as to define a two-dimensional array of discrete crests 85 over the area of the wall. In this example, the crests 85 are arranged in straight lines, i.e. in rows and columns, although in other examples the crests could form a different two-dimensional pattern. Each crest 85 has a plurality of adjacent/neighbouring crests. In the ordered grid-like arrangement shown, each crest has four neighbouring crests, although other arrangements with differing numbers of neighbouring crests could be devised.

The inner wall may be described as being generally egg-box or egg-tray shaped.

The whole inner wall 55 is profiled in the manner described herein such that the inverse of the array of crests 85 and recesses 90 is visible within the underside of the inner wall 55.

Impingement holes 70 are defined in alternating crests 85 when viewed along the longitudinal axis x or transverse axis y of the array of crests 85 formed by the crenulations 75. When viewed along the diagonal axis y, alternate diagonals of the array of crests 85 comprise impingement holes 70 (best illustrated by Figure 6). This provides a uniform/even distribution of impingement holes 70. Different patterns of impingement holes 70 could be provided, or else all crests 85 could have an impingement hole. The optimal arrangement of holes 70 can be determined for each cooling application.

In each recess 90 of the crenulations 75, there is provided a pedestal 65 protruding therefrom. There is therefore a pedestal 65 provided between any two crests 85 when viewed from any of the longitudinal, transverse and diagonal axes x, y, z (best illustrated by Figure 6). These pedestals 65 are of a height such that they extend and make mechanical and thermal connection with the outer wall 60 so as to mechanically and thermally connect the inner and outer walls 55, 60.

The array of pedestals 65 extending from the recesses 90 of the inner surface of the inner wall 55 are formed as cuboidal pedestals of various dimensions and aligned in various orientations. Different shapes of pedestals are possible. Each of the pedestals 65 extends the full height from the inner surface of the inner wall 55 to the inner surface of the outer wall 60 to provide the predetermined gap/spacing between the inner and outer walls 55, 60.

The apertures 80 in the outer wall 60 are formed in a regular array. The separation between apertures 80, the number of apertures 80 in the array, and the arrangement of apertures 80 in the array is dependent on the cooling application in question. The separation between apertures 80 may be designed based on the number and spacing of the impingement holes 70 present in the array of crenulations 75. The apertures 80 are laterally offset from the impingement holes 70, i.e. such that they are not directly above the impingement holes.

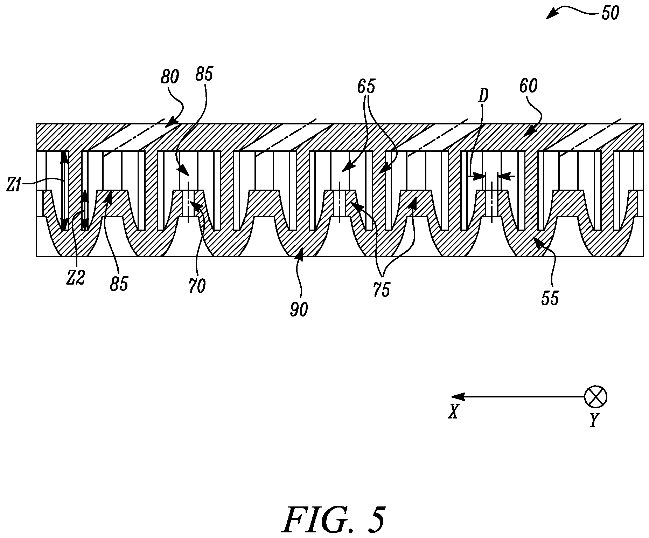

Figure 5 illustrates a side view of the double-wall geometry 50 of Figure 4 when viewed from the transverse direction y. From this view, it can be seen that the crenulations 75 are shaped so as to from raised crests 85 and lowered recesses 90 relative to the plane of the inner wall 55. Each crest 85 is flanked, or fully surrounded, by a recess 90.

The apertures 80 in the outer wall 60 are angled relative to the longitudinal axis x at an angle of approximately 30 degrees. That is, the central axes of the apertures 80 in the outer wall 60 are angled relative to the outer wall 60 at an angle of approximately 30 degrees. The apertures 80 are angled such that the point at which the central axes of the apertures 80 meet the inner surface of the outer wall 60 (i.e. the opening in the inner wall) is roughly aligned with the crests 85 that do not contain the impingement holes 70. The apertures can be at any desired angle and may be fan shaped, cylindrical or otherwise shaped to suit specific requirements.

The diameter of the impingement holes Dᵢ is of the order of 1 mm but could vary from approximately 0.1 to 2.5 mm.

The height of the pedestals z₁ is approximately five times the diameter of the impingement holes Dᵢ, i.e. approximately 5mm in this example. However the height could vary between one and ten times the diameter Dᵢ in other examples, e.g. between 0.1 and 25mm.

It can be seen that the height of the pedestals z₁ is equal to the separation distance between the inner wall 55 and the outer wall 60, i.e. the pedestals 65 extend between the inner wall 55 and the outer wall 60. The amplitude of the crenulations z₂ is approximately half the height of the pedestals z₁, i.e. approximately 2.5mm. It will therefore be appreciated that that the amplitude of the crenulations z₂ is equal to half the separation distance between the inner wall 55 and the outer wall 60, i.e. the crenulations 75 do not extend to the outer wall 60.

In other examples, the amplitude of the crenulations z₂ could vary between one tenth and nine tenths of the maximum spacing between the walls or the height of the pedestals (i.e. 0.1-0.9 z₁).

Figure 6 illustrates a partially cut-away plan view of the double-wall geometry 50 of Figure 4. It can be seen from this view that each crest 85 of the crenulations 75 is completely surrounded by a network of recesses 90 as a result of the inner wall 55 being crenulated in both the longitudinal direction x and the transverse direction y.

Each crest 85 has a levelled surface, or land, at its peak. A generally rectangular or square end of the crest is shown. The surrounding recess network therefore comprises four recesses 90 surrounding the perimeter of each crest 85. The crest could be circular or differently shaped as required.

The array of crests 85 comprises a regular array in which the crests 85 are distributed in rows in the longitudinal direction x and columns in the transverse direction y. Pedestals 65 are positioned in the recesses 90 between any two crests 85 such that each crest is surrounded by eight pedestals 65. In the example shown, a pedestal is located part-way along each edge of a crest, as well as at each corner of the crest.

Each crest may have a total of eight neighbouring crests in the array, i.e. with a pedestal interposed in the recess between a crest and its neighbours.

The embodiments shown and described herein have generally attempted to maximise impingement cooling effects and form channels for the coolant flow. However those geometries can be altered according to the general principles described herein as may be required for specific operational requirements. The openings 80a of the apertures 80 on the outer surface of the wall 60 are elliptically shaped in this example. This may be the same as the openings of the apertures 80 in the internal surface of the wall 60. Alternatively the internal surface openings could be smaller and/or circular in shape to create an aperture that varies in profile between inlet and outlet.

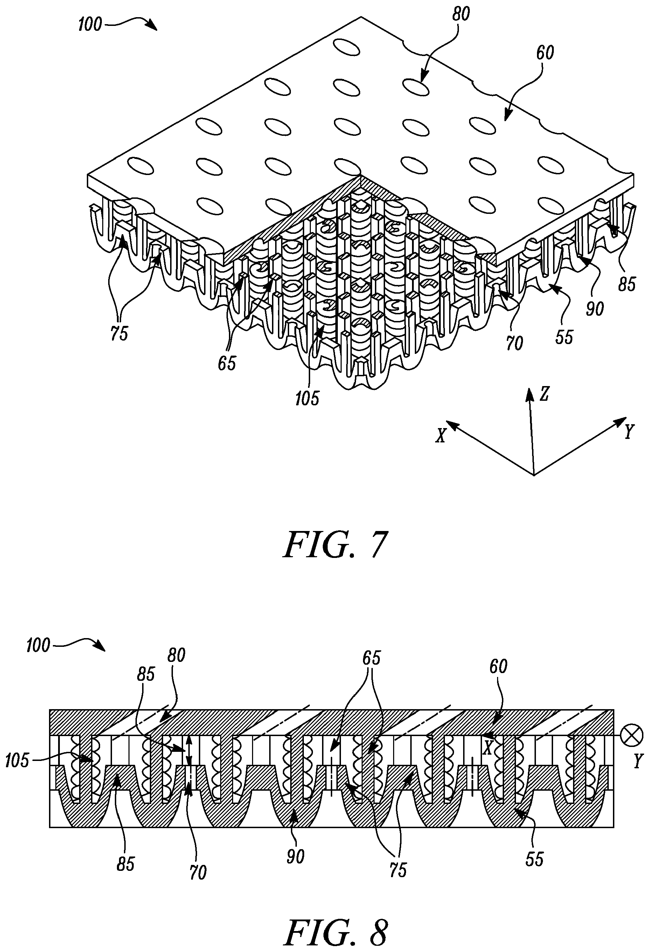

Figure 7 illustrates a double-wall geometry 100 according to a second embodiment of the present disclosure, and Figure 8 illustrates a side view of the double-wall geometry 100 of Figure 7 when viewed from the transverse direction, y.

The double-wall geometry 100 of the second embodiment differs from the double-wall geometry 50 of the first embodiment only in that it further comprises helical pedestals 105 (i.e. pedestals that take a coiled or wound form, rather than the straight pedestals 50 that have substantially constant cross-sectional profile).

As with the first embodiment, the coiled pedestals 105 are provided in the recesses 90 of crenulations 75. These coiled pedestals 105 are of a height such that they extend and make mechanical and thermal connection with the outer wall 60 so as to mechanically and thermally connect the inner and outer walls 55, 60.

The coiled pedestals 105 are provided in a first portion of the recesses 90. The double-wall geometry 100 additionally comprises pedestals 65 provided in a second portion of the recesses 90. The first and second portions overlap to provide an interspersed array of coiled pedestals 105 and pedestals 65 extending from the inner surface of the inner wall 55 to the inner surface of the outer wall 60 to provide a mechanical and thermal connection between the inner and outer walls 55, 60.

In use, coolant is fed under pressure to the underside of the inner wall 55, i.e. the side that faces away from the outer wall 60. A cavity may be maintained under elevated pressure for constant supply of coolant to the whole area of the underside of the inner wall 55. In this regard, the relevant component may be hollow, e.g. in the case of a turbine blade or vane.

Coolant is injected under pressure into the double-wall geometry 50, 100 through the impingement holes 70 in the crests 85 of the inner wall 55. The resultant high velocity jet of coolant flow impinges on the opposing surface of the hotter outer wall 60 causing heat loss from the outer wall 60. Coolant flows laterally though the void towards an outlet, thereby flowing over pedestals and other crenulations 75. This promotes turbulent, cooling flow over those parts also. Thus the conductive pedestals 65 can conduct heat from the external wall 60 along the pedestals to the internal wall 55, all of which components can experience cooling by the coolant flow through the double-wall geometry.

In the examples of Figures 4 to 8, the outlet openings are provided by apertures 80. In other examples it may be possible to vent coolant from the edges of the structure.

Coolant leaves the double-wall geometries 50, 100 via the apertures 80, which creates a thin protective film of cold fluid over the external surface of the outer wall 60, further reducing the temperature of the outer wall. The array of apertures 80 can provide a generally uniform layer of coolant over the external surface to envelope it from the hotter external environment. This can be used to maintain the external surface at a temperature significantly below the external environment in which it is located.

The crenulated/undulating wall 55, as well as offering a good area for convective cooling, can also offer improved thermo-mechanical properties for dissipating thermal stress due to differences in temperature between the inner and outer wall and/or over the area of the double wall geometry.

Some of the features and embodiments described herein may provide one or more of the following advantages:
- An aerothermal benefit as a result of a larger coolant wetted surface area;
- A reduction in the magnitude of the thermal gradient between the inner and outer walls;
- A reduction in thermal stresses of the double-wall geometry, particularly when under load;
- An increase in the overall mechanical compliance of the double-wall geometry, particularly when under load;
- An increase in the component/system lifetime;
- An increased turbulent flow mixing within the double-wall geometry;
- The ability to channel the direction of coolant flow;
- An increased heat transfer effect;
- An added convective cooling effect within the outer wall;
- An increased conductive cooling effect;
- A reduction in the coolant flow volume required to achieve a predetermined design life of the rotor blade.

The double-wall geometries 50, 100 may be manufactured using a casting process, via bonding of multiple parts, via laser sintering, or any combination of these methods. Alternatively, it will be appreciated that the double-wall geometries 50, 100 may be formed by any suitable method provided the resultant parts can withstand high temperatures and/or high pressures.

Although each of the above embodiments has been described in relation to the inner wall 55 being crenulated, it will be appreciated that the inner wall 55 may be castellated, concertinaed, corrugated, convoluted, folded, bent, wrinkled, rumpled, ridged, grooved or otherwise structurally altered to form crests and recesses as described herein.

Although the present disclosure has been described above in relation to the double-wall geometry 90 comprising both coiled pedestals 95 and pedestals 65, it is foreseen that the double-wall geometry may comprise only the coiled pedestals 95. It is also foreseen that the coiled pedestals 95 may be springs and/or helical pedestals.

Although the pedestals of both embodiments have been described in relation to cuboidal pedestals 65, it will be appreciated that the pedestals may be of any shape, or any combination of shapes, for example triangular prisms, pentagonal prisms or hexagonal prisms.

Although the diameter of the impingement holes Dᵢ has been described above as being of the order of 1mm, it will be appreciated that the diameter of the impingement holes may be between 0.1mm and 2.5mm, between 0.3mm and 2 mm, or between 0.5mm and 1.5mm.

Although the height of the pedestals z₁ has been described above as being between 1 times and 10 times the diameter of the impingement holes, that height may more-specifically be between 3 times and 8 times the diameter of the impingement holes, or between 4 times and 6 times diameter of the impingement holes.

Although the amplitude of the crenulations z₂ has been described above as being between 0.1 times and 0.9 times the height of the pedestals, the amplitude of the crenulations may more-specifically be between 0.3 times and 0.7 times the height of the pedestals, or between 0.4 times and 0.6 times the height of the pedestals.

Although the diameter of the apertures D_{f} has been described above as being between 0.1mm and 2.5mm, the diameter may more-specifically be between 0.3mm and 2 mm, or between 0.5mm and 1.5mm. The diameter of the apertures D_{f} may or may not be set such that it is equal to the diameter of the impingement holes Dᵢ.

Although the present disclosure has been described in relation to a double-wall geometry, it will also be appreciated that a system having more than two walls is anticipated. In such a system, crenulations 75, pedestals 65 and impingement holes 70 may be present on every wall, or on selected walls.

It will also be understood that the double-wall geometry described herein is suitable for any components having a wall intended to be exposed to an extreme temperature environment, such as a temperature greater than the melting point of the material make-up of said wall. For example, the double-wall geometry could be implemented in other regions of a gas turbine engine, such as the nozzle guide vanes, the stator vanes, the turbine vanes, in combustor cooling, or the like. Alternatively, the double-wall geometry may be implemented in other heat exchange fields outside of gas turbine engines.

## Claims

1. A wall cooling system comprising a double-wall geometry having:
a first wall extending over a plan area; and
a second wall extending over the plan area and spaced from the first wall by a gap,
the first wall comprising a plurality of upstanding members spanning the gap and contacting the second wall such that the first and second walls are mechanically and thermally connected,
the first wall shaped so as to provide a two-dimensional array of crests and recesses, wherein the crests are spaced from the second wall, and
the first wall comprising a plurality of through-holes for flow of coolant through the first wall and into the gap.

2. The cooling system according to Claim 1, wherein each of the plurality of through-holes is provided through a crest of the first wall.

3. The cooling system according to any one of the preceding claims, wherein the crests each comprise a discrete apex, spaced from each adjacent crest of the array by a recess.

4. The cooling system according to any one of the preceding claims, wherein each crest is surrounded on all sides in the plan area by a recess.

5. The cooling system according to any one of the preceding claims, wherein the first wall is undulating in form to provide the two-dimensional array of crests and recesses.

6. The cooling system according to Claim 5, wherein the first wall is undulating in at least two directions so as to define the two-dimensional array of crests and recesses.

7. The cooling system according to any one of the preceding claims, the plurality of upstanding members being positioned in the recesses of the two-dimensional array.

8. The double-wall geometry according to Claim 7, the plurality of upstanding members being positioned in the recesses of the two-dimensional array in-between two adjacent crests of the first wall.

9. The cooling system according to any one of the preceding claims, wherein the second wall is planar in form such that the two-dimensional array of crests and recesses causes variation in the gap between the first and second walls over the plan area.

10. The cooling system according to any one of the preceding claims, wherein the plurality of upstanding members comprises a plurality of helical upstanding members.

11. The cooling system according to Claim 10, wherein the first wall comprises an interspersed array of straight upstanding members and helical upstanding members.

12. The cooling system according to any one of the preceding claims, wherein the second wall comprises an array of apertures over the plan area.

13. The cooling system according to Claim 12, wherein the apertures are angled through the second wall relative to a surface normal of the second wall.

14. The cooling system according to any one of the preceding claims, wherein the height of the crests is greater than a quarter of the height of the upstanding members and/or the gap in an adjacent recess.

15. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft,
wherein the turbine (19) comprises a cooling system according to any of Claims 1 to 15.
